# EUROPEAN PATENT SPECIFICATION

(11) **EP 1 116 197 B1**
(45) Date of publication and mention of the grant of the patent: **02.05.2003**
(21) Application number: 99968267.7
(22) Date of filing: 26.08.1999
(51) Int. Cl.: G09B 19/18, G06F 17/60

(54) **SIMULATION SYSTEM II**
SIMULATIONSSYSTEM II
SYSTEME DE SIMULATION II

(30) Priority: 31.08.1998 SE 9802925
(43) Date of publication of application: 18.07.2001
(73) Proprietor: Celemiab Systems AB, 201 25 Malmö (SE)
(72) Inventor: MELLANDER, Klas, S-211 38 Malmö (SE)
(74) Representative: Akerman, Marten Lennart
(86) International application number: SE9901462
(87) International publication number: WO00013161

(56) References cited:
- WO-A-97/07472
- WO-A-99/63503
- US-A- 5 737 581
- US-A- 5 764 953
- US-A- 5 781 454

## Description

The invention relates to a method and a device for simulating an interaction process.

With growing internationalization of business, companies tend to develop multinational or even global frameworks for their organizations. Typically, the headquarters of each multinational or for that matter national company has a global overview of the market and the products of the company, whereas each outlet, e.g. a store or a sales affiliate, has local view and operates under local competitive conditions. More specifically, the outlets face the problem of matching centrally designed company or product images with the specific demands and values of the local customer. Customer values may also change, and in a competitive surrounding it is important that the outlets face the problem of matching centrally designed company or product images with the specific demands and values of local customers. The attitudes of the Customers, i.e. customer values, may also change, and in a competitive surrounding it is important that the outlet is able to continue to attract customers despite changes in customer values. Now the different point of views are not always easily made compatible, and there is often insufficient understanding of the way to achieve local competitiveness within a global framework.

In order to remedy this deficiency the present applicant has previously developed and marketed a system for simulating this kind of business process, viz. a product called Livon™, © Celemiab International AB, Sweden. This system is, however fairly complex and the fact that it requires a fairly large number of human participants and is time consuming to run, makes it difficult to demonstrate and unsuitable for the running of small scale simulations. Therefore, there is a need fore a more efficient simulation system of this kind.

### Prior Art

An example of prior art in this field is described in US Patent 5,056,792 (Helweg-Larsen and Cousins). This patent describes a business education model comprising tokens to indicate values of resources such as raw material, cash or debts (negative resource), a board having separate areas for representing different entities, such as plants or specific purpose locations, and cards indicating specifications for the aforementioned entities. The models are used as a means to set up different business situations and to observe the consequences of decisions in monetary terms.

Prior art, however, suffer i.a. from the drawback that once having stepped through a model with established resource parameters it is hard to change the conditions in order to observe the consequences of other conditions or choices.

### Objects of the Invention

The object of the present invention is to provide an efficient system for simulating an interactive process, e.g. a business process involving the problems of meeting competitors actions and of matching a company or product image to varying customer demands and values.

Another object of the invention is to clarify the interaction separately for each competitor, the interaction between corporate decisions and local decisions.

Yet another object is to clarify the interaction between a set of customers and the profile chosen by the competitors

These and further objects of the invention are achieved by a the use of a model for simulating an interactive process in combination with a parameter processing device, the use of which allows the device parameter values to be set initially and thereafter to be manipulated, thus arriving at different status's of the model at different points of time in the simulation of the process.

### Summary of the Invention

The invention is directed to a interactive process where competing companies offer their characteristic products and services in stores on a common market, and where customers make their selections based on specific demands and values. The invention is based on the theoretic view that a decision is made under consideration of a number of selection criteria, i.e. demands and values, involving rational as well as emotional and expressive aspects. Each individual customer has its specific demands and values, and its own view of the order of importance of these purchase criteria, in short called the preferences and perception at the very moment of the purchase decision determines how the customer will act, i.e. the purchasing behavior. In an ideal situation when the preferences of a customer and its perception of a brand is identical, the brand is adopted by the customer.

According to the invention, a model is provided that simulates different customer preferences, different competitor images and the way customer perceptions of the competitor images can be influenced. The simulation is based on events such as new customers entering the market and established customer reconsidering their choice of store.

The perception of the customers depends on the positioning of the company and how the positioning is communicated to the customers. The perception can be influenced in a number of positioning fields such as service concept, people skills, product range, local product activities, local service activities and price. The strength of the positioning in each field is indicated in the shape of service image and/or prestige image and/or price image, each image type being given points for the sake of illustrating its level. In one embodiment of the invention, level indicators are provided to indicate the sum of the service level points, the prestige level points and the price level points from the different positioning fields. Predefined parameters are given as initial values for different variable parameters, such as level of service, level of prestige, and a price indicator.

The invention will be further described below in conjunction with the drawings of a preferred embodiment of the invention.

### Short Description of the Drawings

- Fig. 1: shows an overview of a board to be used in accordance with an embodiment of the invention.
- Fig. 2: shows an embodiment of a set of cards being level indicators according to the invention
- Fig. 3: shows an embodiment of a set of cards being positioning cards for corporate decisions according to the invention.
- Fig. 4: shows an embodiment of positioning cards for local decisions according to the invention.
- Fig. 5: shows two embodiments of a customer card according to the invention.
- Fig. 6: shows three embodiments of an event card according to the invention.
- Fig. 7: shows an example of an algorithm for performing the simulation.
- Fig. 8: shows a parameter processing device for implementing the simulation in the form of a computer program.
- Fig. 9: shows the human interaction with the inventive system, including the parameter processing device at fig. 9.

### Detailed Description of a Preferred Embodiment

The simulation system according to the invention comprises a model for illustrating the competition between four different companies. The companies compete for the same customers in the same segment of the market. The system also comprises a parameter processing device for processing parameters given in the model. The parameter processing device operates in interaction with the model and the user of the system. With the parameter processing device parameters can be easily adjusted in order to simulate the business consequences of alternative actions.

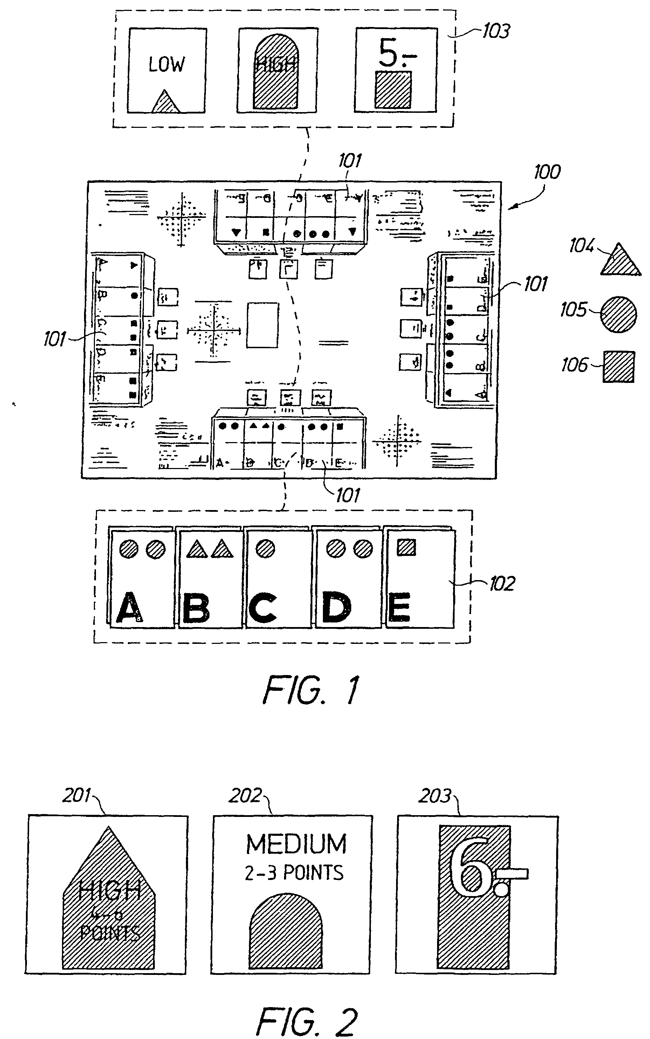

In Fig. 1 is shown a map or a board 100, also called a WorkMat™, illustrating the changing situation between four competing companies during the simulation. The board comprises four different areas 101, one each for the competing companies, Alpha, Beta, Gamma and Delta.

Each company area comprises areas 102 for illustrating the present co-operate decisions on positioning and marketing and local decisions for activities and pricing, indicated by positioning cards which are more thoroughly described later. The area also comprises areas 103 for illustrating the present levels of service, prestige and a price indicator. As illustrated in fig. 1, service image is represented by a triangular indicator 104, prestige image by a round indicator 105, and price image by a square indicator 106.

In Fig. 2 three exemplary 201-203 cards are shown representing the level of service, prestige and price presently illustrating how the customers perceive you.
a) service high (4-6 points)
b) prestige medium (2-3 points)
c) price high (6:-)
In this embodiment the levels in all three of the above mentioned areas are restricted to low medium and high. In order to complicate the simulation the number of levels may of course be increased. On the board preset levels for service, prestige and price are set low in order to decrease the number of cards necessary.

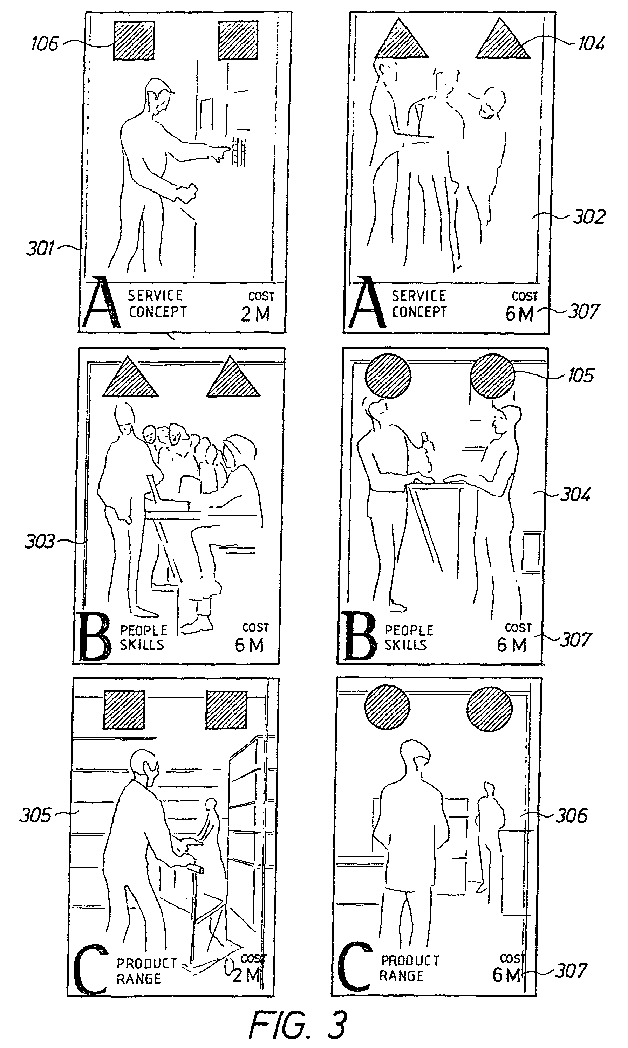

In Fig. 3 one side each of six positioning cards 301-306 are shown relating to the corporate decisions on service concept A, peoples skills B and product range C, each having two choices high or low as indicated with one or two symbols, respectively.
The symbols for prestige 105, price 106 and service 104 are shown on the cards all indicating a high level, as well as a monetary value 307.

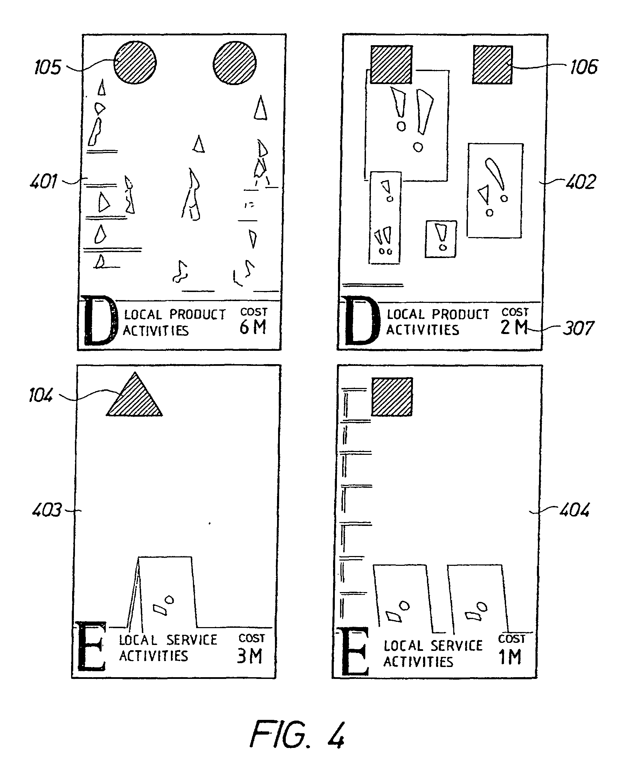

In Fig. 4 one side each of four positioning cards 401-404 are shown relating to local decisions on local product activities and local service activities each having two choices high or low as indicated with one or two symbols, respectively.

The local products activities card D 401 indicates high prestige, and 402 indicates high price. The local service activities card E 403 indicates low service, and card 404 indicates low price.

The symbols for prestige 105, price 106 and service 104 are shown on the cards as well as a monetary value 307.

As the combinations of the five types of positioning cards A-E change, the indicators on the positioning cards are added and the results as to service, prestige and price is shown by placing the correct level indicator card 201-203 for each. These level indicators will thereafter be used for deciding which store will attract which customer and which store may also lose or gain customers through a changing image.

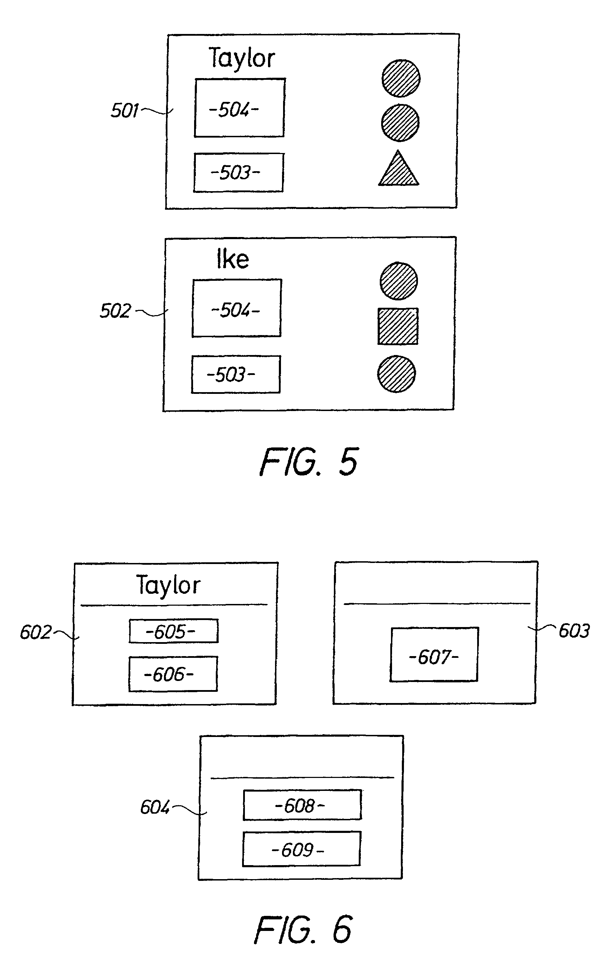

The cards 501 and 502 shown in Fig. 5 are used in introducing a new customer. The customers are characterized by the ranking of price, prestige and service, in the indicator 504.

In Fig. 2 three exemplary 201-203 cards are shown representing the level of service, prestige and price presently illustrating how the customers perceive you.
a) service high (4-6 points)
b) prestige medium (2-3 points)
c) price high (6:-)
In this embodiment the levels in all three of the above mentioned areas are restricted to low medium and high. In order to complicate the simulation the number of levels may of course be increased. On the board preset levels for service, prestige and price are set low in order to decrease the number of cards necessary.

In Fig. 3 one side each of six positioning cards 301-306 are shown relating to the corporate decisions on service concept A, peoples skills B and product range C, each having two choices high or low as indicated with one or two symbols, respectively.
The symbols for prestige 105, price 106 and service 104 are shown on the cards all indicating a high level, as well as a monetary value 307.

In Fig. 4 one side each of four positioning cards 401-404 are shown relating to local decisions on local product activities and local service activities each having two choices high or low as indicated with one or two symbols, respectively.

The local products activities card D 401 indicates high prestige, and 402 indicates high price. The local service activities card E 403 indicates low service. and card 404 indicates low price.

The symbols for prestige 105, price 106 and service 104 are shown on the cards as well as a monetary value 307.

As the combinations of the five types of positioning cards A-E change, the indicators on the positioning cards are added and the results as to service, prestige and price is shown by placing the correct level indicator card 201-203 for each. These level indicators will thereafter be used for deciding which store will attract which customer and which store may also lose or gain customers through a changing image.

These specific customers. "Taylor" and "Jue", favor the "Prestige" level. Prestige has the highest ranking also shown by "Points on Prestige". In case this will not differentiate the possible stores from one another the different stores may have assigned "Value Segments" 503, such as "Tradition", "Collective", "Individual", and "Opportunities" to enable the client to chose between stores exhibiting the same profile as to service, prestige and price.

Fig. 6 shows three embodiments 602, 603, 604 of event cards 600 according to the invention. The purpose of the event cards is to provide a current simulation with new parameters, and specifically with parameters that require human interaction with the model.

Card 602, concerning customer "Taylor", has a customer description indicator 605, in this particular example stating that Taylor is very prestige oriented, and is looking for more points on prestige. An event indicator 606 concerns an event to take place. In this example, the customer will leave for another store, if available. If not, the customer stays put.

Card 603 comprises an event indicator 607, e.g. inviting you to calculate the outcome halfway through year 3. After that the local product and service activities (cards D and E) as well as the price level.

Card 604 concerns important news, and events regarding those news. In one example an event indicator 608 explains that another company has changed it's price, and instructs you to follow accordingly. In a second indictor 609 may comprise instructions to ensure that the service, prestige and price level indicators reflect the new positioning, etc, for all four stores. In one preferred embodiment of the invention the simulation is performed using the board shown and the different sets of cards. The simulation is carried forward by the changes, corporate and local, in the levels of service, prestige and price, brought about by the five variables as represented by the cards A to E.

To be noted is that the event cards, and new positioning cards sometimes are provided with a value parameter indication which indicates the costs of the selected action or the predetermined action, if such is the case.

The simulation on the board follows the general instructions given by the event cards and it should be clearly understood that the course of the simulation is guided by the chosen variables. Below a possible change of events on the board is accounted for. In this simulation two of the four stores are run by predetermined parameters and the other stores are run by persons taking part in the simulation. This means that the participants will not know what the course of the events will take them as only their own choices of positioning can be influenced by themselves and they will have to adjust to the predetermined parameters and the choices made by the competitor.

There are thus possibilities to simulate what a certain course of handling will give as a result considering the environment. Below follows a general description of the events during a typical simulation.
1 Set initial values for positioning and marketing by placing the 5 cards (A-E) as indicated on board. Set the service, prestige and price level indicators for all four stores as indicated on the board.
2 Place the predetermined 16 customer cards on the board in connection to the store indicated (Alpha, Beta, Gamma and Delta). The cards indicate which store each customer prefers.
3- Start of year 1. New customers picks their store according to preferences. Established customers may reconsider.
4- A number of customers are added according to their preferences.
5- A number of customer looking for e.g. lower prices leaves for another store if such is available., otherwise they remain with the present store.
6- End of year one. As this year was a set-up year there might be a guide to the customer distribution for all four stores.
7- Use is made of a Profit and Loss Statement to calculate the outcome of the year 1.
8- Start year 2. The strategies on both corporate and local positioning, pricing and marketing may voluntarily be changed. Optionally preset variables are set for two of the companies, Gamma and Delta. This may later be changed by predetermined events represented by event cards present in the generator.
9- Change in the service concept for Gamma is presented. The costs of the change are indicated on the card. Other changes are likewise indicated for Delta
10- Control that the service, prestige and price level indicators reflect the new positioning etc. for the companies.
11- New customers enter (event cards) and old customers reconsider their choice of store. Repeated.
12- Halfway through year 2. Calculate outcome. Possible change of local product and service activities (card D and E) as well as price level. No change in corporate positioning and marketing.
13- Predetermined changes in local Product Activities for Gamma and Delta indicated on event cards.
14- Gamma changes its price indicator.
15- New customers enter (event cards) and old customers reconsider their choice of store. Repeated.
16- End of year two. Alpha and Beta may change both corporate and local positioning, pricing and marketing.
17- Predetermined changes in Corporate Decisions for Gamma and Delta indicated on event cards.
18- Control that the service, prestige and price level indicators reflect the new positioning etc. for the companies.
19- New customers enter (event cards) and old customers reconsider their choice of store. Repeated
20- Halfway through year 2. Calculate outcome. Possible change of local product and service activities (card D and E) as well as price level. No change in corporate positioning and marketing.
21- Predetermined changes in local Service activities for Gamma and Delta indicated on event cards.
22- Predetermined change in price for Delta.
23- Control that the service, prestige and price level indicators reflect the new positioning etc. for the companies.
24- New customers enter (event cards) and old customers reconsider their choice of store. Repeated
25- End of year three.
26- Calculate outcome

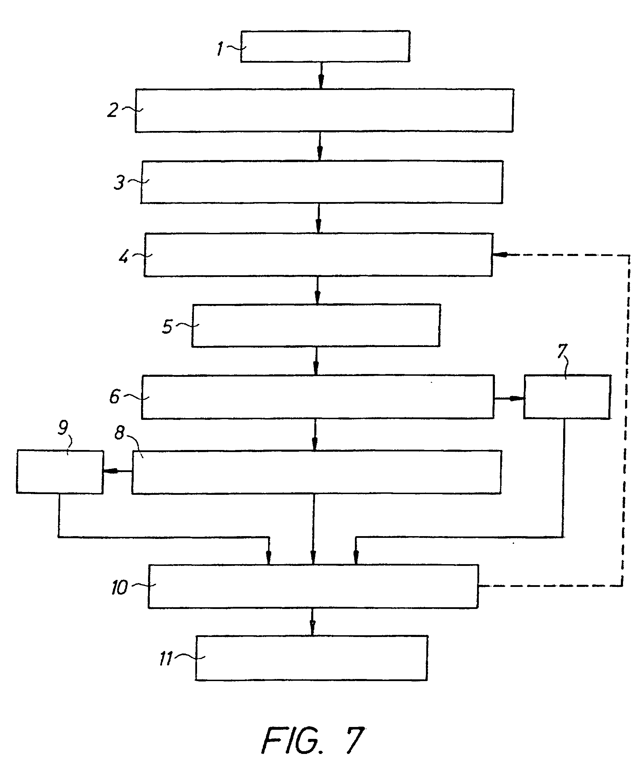

In Fig. 7 an example of an algorithm for performing the simulation is shown in the form of a flow sheet. This algorithm mirrors the flow in one store. Other parameters may of courses be added after choice as long as the basic idea remains the same.
1. Start of simulation
2. Set initial values for positioning and marketing for units, e.g. stores, used in the simulation
3. Assign present clients, e.g. customers, to the units
4. New clients assigned to the units according to their preferences
5. Existing clients change one or more of their preferences
6. Changes in client preferences results in changes of preferred unit
7. Unit looses client or attracts new client
8. Changes in initial values for positioning and marketing results in clients changing preferred unit
9. Unit looses client or attracts new client
10. Calculation of outcome of a period
11. End of simulation

After step 10 the simulation may continue for a new period starting maybe with step 4 or 8 and changing the order between the steps. It should be understood that this may be built in through new event cards or by some other equivalent measure.

In Appendix A1 is shown an example of a profit/loss statement 800 to be used for calculating the output of a simulation or after periods of the simulation. This specific profit and loss sheet is intended for a three-year period, each year divided into two periods. The results of year one has been filled in to illustrate the principle behind the calculation. The parameters involved are number of customers. Fixed costs depending on the number of customers, operating costs according to the amounts on the positioning cards giving a total cost, from which is subtracted the sales during the period.

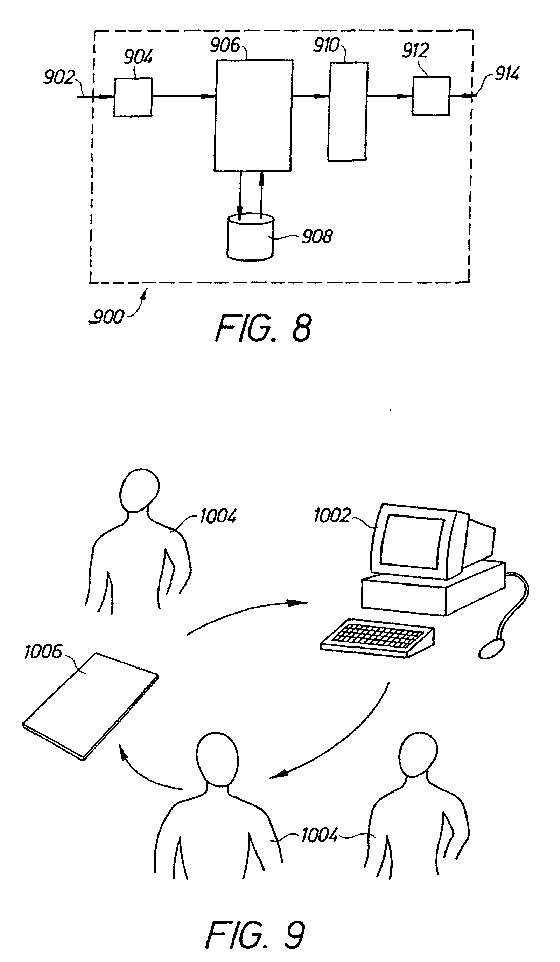

Fig. 8 shows a block diagram of an embodiment of a status description generator 900 comprising an input interface 904 for receiving input soft value parameters 902. The input interface 904 is coupled to a parameter compiler 906, which in its turn is communicatively coupled to a rule database 908. The rule data base 908 is devised to store predetermined rules for interpreting and compiling input parameter values and combinations of parameter values into another parameter description here called status interpretation parameters. The rule database is in one embodiment further devised to store predetermined action parameters suggested to put into the simulation dependent on the current status. The compiled parameters and where appropriate the action parameters are passed on to means for generating a company characteristic description. These means are also called description generator 910 devised to generate a description of the parameters that is conceivable by human interactors. The description of output parameters 914 is then presented by means of an output interface 912. In the embodiment of the inventive system as shown in Fig. 8, the input and output interfaces preferably make use of the screen of the standard computer set.

The invention may also be implemented in the form of a computer program. An embodiment of the inventive system is shown in Fig. 9. A parameter processing device 1002 realized by means of a standard computer set, set up with a specific program comprising means in accordance with the inventive concept is shown in interaction with human users 1004 and a model 1006. The computer set comprises per se known data processor, storage medium, data presentation device, and a data I/O-devices. Simulation paramours are processed by means of the parameter processing device 1002 and the status of a simulated business is illustrated by means of the model. Input and output parameters to and from the model and the parameter processing device are handled by the interacting human user 1004. The parameter processing device is provided with a number of parameter input and output interfaces as well as different parameter processing device nits for different simulation parameters.

The invention has been described with reference to a business simulation system relating to four competing stores. It should be understood that the invention not only encompasses a four-store set up but may be applied for similar simulations that would fall within the scope of the appended claims.

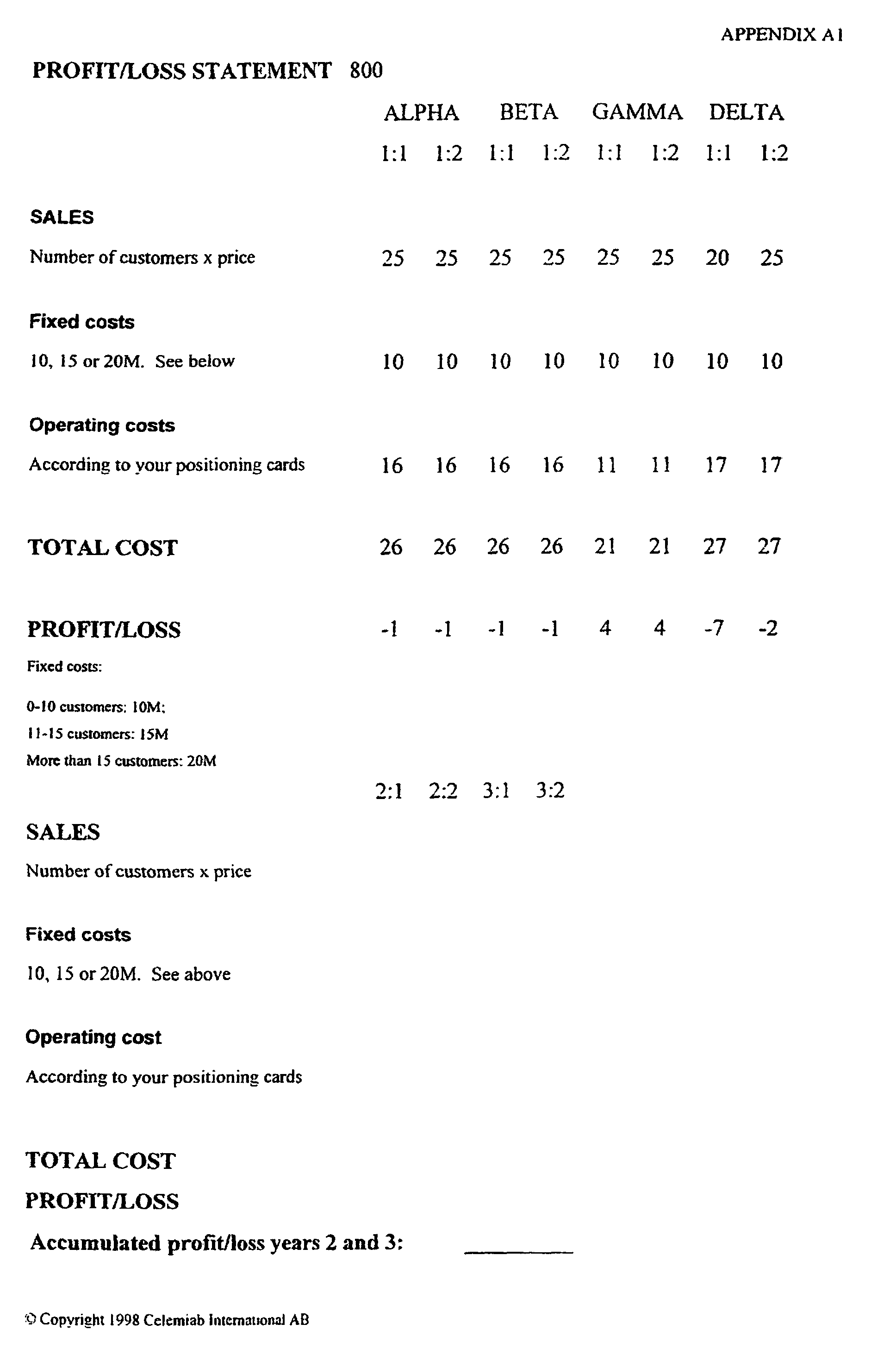

## Claims

1. System for simulating a activity process comprising:
a) a model for illustrating the momentaneous status of the activity process having
- means for representing one or more activity units (100,101),
- means for establishing a preexisting condition (301-306, 401-404),
- means for changing the existing condition (501, 502, 600),
- means for indicating at least the present levels of a first, a second and a third variable attributed to said activity unit (200,201,203)
- means (307) for indicating a predetermined value on said means for establishing a preexisting condition and on said means (601) for changing the existing condition
b) output means (800) for producing a resulting status at, at least one, determined point of time in the simulation process.

2. System according to claim 1, **characterized in that** said means for representing one or more activity units comprises a board (100), said board comprising areas (101) representing at least one activity unit, areas (102) for representing activities related to said activity units, areas (103) for presenting said at least first (104), second (105) and third (106) variable of each of said activity units to a demanding unit.

3. System according to claim 1 or 2, **characterized in that** said means for establishing a preexisting condition comprises two sets of cards, one set (301-306) representing initial demanding units, and one set (401-404) representing initial status for activities related to said activity units.

4. System according to any of the preceding claims, **characterized in that** said one set representing initial status activity cards, have values (307) attached.

5. System according to any of the preceding claims, **characterized in that** said means for changing the existing condition comprises a set of event cards representing at least one or more of the following: new demanding units and preferences of the same. existing demanding units reconsidering their preferences, predetermined changes in the activities of each of said activity units, predetermined points of time for at least one operator to interact with the simulation.

6. System according to any of the preceding claims, **characterized in that** said means for indicating the present levels of said at least first, second and third variable of each of said activity units comprises level indicators (200,201,202), the value of which is calculated from the status of the prevailing activities, as represented by the activity cards.

7. System according to any of the preceding claims, **characterized in that** the system is adapted to a business simulation, that the activity units represents a business units, that activity represent local and corporate activities as represented by positioning cards and that said at least first, second and third variable of each of said business units represents level indicators representing a summation of said positioning cards.

## Patentansprüche

1. System zum Simulieren eines Aktivitätsprozesses enthaltend:
a) ein Modell zum Verdeutlichen des momentanen Status des Aktivitätsprozesses mit
- Mittel zum Darstellen einer oder mehrerer Aktivitätseinheiten (100,101),
- Mittel zum Aufstellen einer präexistenten Bedingung (301-306, 401-404),
- Mittel zum Ändern der existierenden Bedingung (501,502,600),
- Mittel zum Angeben wenigstens der gegenwärtigen Level einer ersten, einer zweiten und einer dritten Variablen, die den Aktivitätseinheiten (200, 201, 203) zugeschrieben werden,
- Mittel (307) zum Angeben eines vorbestimmten Wertes für die Mittel zum Aufstellen einer präexistenten Bedingung und für die Mittel (601) zum Ändern der existierenden Bedingung,
b) Ausgabemittel (800) zum Erzeugen eines resultierenden Status zu wenigstens einem bestimmten Zeitpunkt in dem Simulationsprozeß.

2. System nach Anspruch 1,
**dadurch gekennzeichnet,**
**daß** die Mittel zum Darstellen einer oder mehrerer Aktivitätseinheiten eine Tafel (100) enthalten, daß die Tafel Bereiche (101), die wenigstens eine Aktivitätseinheit darstellen, Bereiche (102) zum Darstellen von Aktivitäten, die Bezug zu den Aktivitätseinheiten haben und Bereiche (103) zum Darstellen wenigstens der ersten (104), zweiten (105) und dritten (106) Variablen jeder der Aktivitätseinheiten nach einer Nachfrageeinheit aufweist.

3. System nach Anspruch 1 oder 2,
**dadurch gekennzeichnet,**
**daß** die Mittel zum Aufstellen einer präexistenten Bedingung zwei Sätze von Karten enthalten, wobei ein Satz (301-306) Anfangsnachfrageeinheiten und ein Satz (401-404) einen Anfangsstatus für Aktivitäten darstellen, die Bezug zu den Aktivitätseinheiten haben.

4. System nach jedem der vorhergehenden Ansprüche,
**dadurch gekennzeichnet,**
**daß** dem einen Satz, der die Anfangsstatus-Aktivitätskarten darstellt, Werte (307) zugeteilt sind.

5. System nach jedem der vorhergehenden Ansprüche,
**dadurch gekennzeichnet,**
**daß** die Mittel zum Ändern der existierenden Bedingung einen Satz von Ereigniskarten enthalten, die wenigstens eins oder mehr des folgenden darstellen: Neue Nachfrageeinheiten und Präferenzen derselben, existierende Nachfrageeinheiten, die ihre Präferenzen revidieren, vorbestimmte Änderungen in den Aktivitäten jeder der Aktivitätseinheiten, vorbestimmte Zeitpunkte für wenigstens einen Operator, um mit der Simulation zusammen zu wirken.

6. System nach jedem der vorhergehenden Ansprüche,
**dadurch gekennzeichnet,**
**daß** die Mittel zum Anzeigen der gegenwärtigen Level der ersten, zweiten und dritten Variablen jeder der Aktivitätseinheiten Levelindikatoren (200, 201, 202) enthalten, deren Wert errechnet wird aus dem Status der vorherrschenden Aktivitäten, wie sie durch die Aktivitätskarten dargestellt sind.

7. System nach jedem der vorhergehenden Ansprüche,
**dadurch gekennzeichnet,**
**daß** das System für eine Geschäftssimulation geeignet ist, daß die Aktivitätseinheiten Geschäftseinheiten darstellen, daß die Aktivitäten lokale Aktivitäten und Firmenaktivitäten wiedergeben, wie sie durch die Positionskarten dargestellt sind, und daß die wenigstens erste, zweite und dritte Variable jeder der Geschäftseinheiten Levelindikatoren darstellen, die eine Summe der Positionierungskarten darstellen.

## Revendications

1. Système pour simuler un processus d'activité comprenant :
a) un modèle pour illustrer l'état momentané du processus d'activité comportant
- des moyens pour représenter une ou plusieurs unités d'activité (100,101),
- des moyens pour établir une condition préexistante (301-306, 401-404),
- des moyens pour modifier la condition existante (501,502, 600),
- des moyens pour indiquer au moins les niveaux actuels de première, seconde et troisième variables, attribuées à ladite unité d'activité (200,201,203),
- des moyens (307) pour indiquer une valeur prédéterminée dans lesdits moyens pour établir une condition préexistante et dans lesdits moyens (601) pour modifier la condition existante,
b) des moyens de sortie (800) pour produire un état résultant en au moins un instant déterminé dans le processus de simulation.

2. Système selon la revendication 1, **caractérisé en ce que** lesdits moyens pour représenter une ou plusieurs unités d'activité comprend un panneau (100), ledit panneau comprenant des zones (101) représentant au moins une unité d'activité, des zones (102) pour représenter des activités associées auxdites unités d'activité, des zones (103) pour présenter au moins ladite première variable (104), ladite seconde variable (105) et ladite troisième variable (106) de chacune desdites unités d'activité à une unité de demande.

3. Système selon la revendication 1 ou 2, **caractérisé en ce que** lesdits moyens pour établir une condition préexistante comprennent deux ensembles de cartes, un ensemble (301-306) représentant des unités de demande initiales, et un ensemble (401-404) représentant des états initiaux pour des activités associées auxdites unités d'activité.

4. Système selon l'une quelconque des revendications précédentes, **caractérisé en ce que** des valeurs (307) sont rattachées audit un ensemble représentant des cartes d'activité d'état initial.

5. Système selon l'une quelconque des revendications précédentes, **caractérisé en ce que** lesdits moyens pour modifier la condition existante comprennent un ensemble de cartes d'événements représentant au moins un ou plusieurs des éléments suivants : nouvelles unités formulant des demandes et préférences des mêmes unités formulant des demandes, unités formulant des demandes existantes reconsidérant leurs préférences, modifications prédéterminées dans les activités de chacune desdites unités d'activité, instants prédéterminés pour qu'au moins un opérateur interagisse avec la simulation.

6. Système selon l'une quelconque des revendications précédentes, **caractérisé en ce que** lesdits moyens pour indiquer les présents niveaux desdites au moins première, seconde et troisième variables de chacune desdites unités d'activité comprend des indicateurs de niveau (200, 201, 202), dont la valeur est calculée à partir de l'état des activités dominantes, comme représenté par les cartes d'activité.

7. Système selon l'une quelconque des revendications précédentes, **caractérisé en ce que** le système est adapté à une simulation de travail, que les unités d'activité représentent des unités de travail, que l'activité représente des activités locales et de sociétés comme représenté par des cartes de positionnement et qu'au moins lesdites première, seconde et troisième variables de chacune desdites unités de travail représentent des indicateurs de niveau représentant une sommation desdites cartes de positionnement.
